# EUROPEAN PATENT APPLICATION

(11) **EP 2 034 766 A1**
(43) Date of publication of application: **11.03.2009**
(21) Application number: 07767576.7
(22) Date of filing: 26.06.2007
(51) Int. Cl.: H04Q 7/38, H04B 7/26, H04M 11/00

(54) **WIRELESS COMMUNICATION SYSTEM**

(30) Priority: 29.06.2006 JP 2006180177
(71) Applicant: TOYOTA JIDOSHA KABUSHIKI KAISHA, Aichi-ken, 471-8571 (JP)
(72) Inventor: ITO, Noriaki, Aichi 471-8571 (JP)
(74) Representative: TBK-Patent
(86) International application number: PCT/JP2007/062770
(87) International publication number: WO 2008/001753

(57) **Abstract**

A disclosed wireless communication system for realizing a packet switching communication and a circuit switching communication between a mobile station and a fixed station is provided. In this system, said fixed station is configured to, when the packet switching communication is established between said mobile station and said fixed station and the line quality of that packet switching communication deteriorates to a level equal to a predetermined level or less, attempt to establish the circuit switching communication with said mobile station; and said mobile station is configured to, when the packet switching communication is established between said mobile station and said fixed station and said mobile station receives a call from the fixed station on the circuit switching communication, establish the circuit switching communication with the fixed station by responding to that call and then disconnect the packet switching communication with the fixed station.

## Description

### BACKGROUND OF THE INVENTION

### 1. Field of the Invention

The present invention generally relates to a wireless communication system for realizing both a packet switching type communication connection and a circuit switching type communication connection between a mobile communication terminal and a fixed station, and more particularly to a wireless communication system whereby a line connection can be maintained without depending on a position of the mobile communication terminal.

### 2. Description of the Related Art

Conventionally a communication system for realizing both a packet switching type communication connection and a circuit switching type communication connection between communication stations has been known. See, for example, JP2000-312229A and JP2006-129019A.

JP2000-312229A discloses an apparatus configured to switch a communication line from an Internet phone line to a public telephone network when the deterioration of voice quality is detected during talking via the Internet phone line so that a condition where calls are disabled is avoided.

JP2006-129019A discloses an on-vehicle wireless LAN system configured to activate an on-vehicle communication module for the wireless LAN when a request signal for the activation of the wireless LAN is received by an on-vehicle communication module for the mobile radio phone.

However, since the conventional apparatus described in JP2000-312229A is not equipped with a fail-safe facility for connecting to the public telephone network, it may be that neither the Internet phone line nor the public telephone line can be connected when the deterioration of voice quality is detected during talking via the Internet phone line and the Internet phone line is disconnected without switching the communication line from the Internet phone line to the public telephone network because of the failure to establish the connection via the public telephone line.

The conventional system described in JP2006-129019A mainly uses the wireless LAN communication and utilizes the mobile radio phone communication only for adjusting the start timing of the wireless LAN communication, and is not equipped with a facility for switching the communication connection from the wireless LAN communication to the mobile radio phone communication when the line quality of the wireless LAN communication deteriorates.

For example, in a wireless communication system configured to realize both packet switching type (or connectionless type) communication connection and circuit switching type (or connection type) communication connection between a mobile communication terminal (a mobile station) and a fixed communication station, it may be required to switch the communication connection from the packet switching type communication connection to the circuit switching type communication connection in which a higher line quality can be expected when the mobile station, which is in voice communication via, for example, VoIP (Voice over Internet Protocol), enters into a (weak electric field) region where the radio wave condition is relatively poor. However, in such a case, according to the conventional apparatuses/systems described in JP2000-312229A and JP2006-129019A, the communication connection cannot be switched to the circuit switching type communication connection and the voice communication connection is disconnected, as described above.

Such a disconnection of the voice communication line would be more serious when the mobile station is an on-vehicle communication terminal and the voice communication is an emergency call for informing a center of the occurrence of an accident or a malfunction.

In other words, in a wireless communication system configured to realize both packet switching type communication connection and circuit switching type communication connection between a mobile communication terminal and a fixed station, a fail-safe facility is requires to prevent an important communication connection from being disconnected even when the mobile station enters into a weak electric field region.

### SUMMARY OF THE INVENTION

To solve the above-mentioned problems, it is a main object of the present invention to provide a novel wireless communication system for maintaining the line connection without depending on the position of the mobile communication terminal.

One aspect of the present invention to achieve the above object is a wireless communication system for realizing a packet switching type (or connectionless type) communication connection and a circuit switching type (or connection type) communication connection between a mobile communication terminal (e.g. an on-vehicle apparatus equipped on a vehicle) and a fixed station (e.g. a center), wherein said fixed station is configured to, when the packet switching type communication connection is established between said mobile communication terminal and said fixed station and the line quality of that packet switching type communication connection is deteriorated to a level equal to a predetermined level or less, attempt to establish the circuit switching type communication connection with said mobile communication terminal; and said mobile communication terminal is configured to, when the packet switching type communication connection is established between said mobile communication terminal and said fixed station and said mobile communication terminal receives a call from the fixed station on the circuit switching type communication connection, establish the circuit switching type communication connection with the fixed station by responding to that call and then disconnect the packet switching type communication connection with the fixed station.

In the context of this aspect, when the packet switching type communication connection is established between said mobile communication terminal and said fixed station, for example, it is monitored by said fixed station whether or not the line quality of that packet switching type communication connection is deteriorated to a level equal to a predetermined level or less.

According to this aspect, in a case where the packet switching type communication connection is required to be switched to the circuit switching type communication connection since the mobile communication terminal, which is a mobile station, enters into the weak electric field region so that the line quality of the packet switching type communication connection deteriorates, a minimum line connection is maintained by the packet switching type communication connection even when it is difficult to smoothly switch into the circuit switching type communication connection. Hence, it is avoided that an important communication may be cut off along the way.

In the meantime, it is preferable that said fixed station of this aspect be configured to, when the packet switching type communication connection is established between said mobile communication terminal and said fixed station and the line quality of that packet switching type communication connection deteriorates to a level equal to a predetermined level or less, attempt to establish the circuit switching type communication connection with said mobile communication terminal at a plurality of times.

In addition, in this aspect, said fixed station may be configured to, when the packet switching type communication connection is established between said mobile communication terminal and said fixed station to communicate a predetermined content and the line quality of that packet switching type communication connection deteriorates to a level equal to a predetermined level or less, attempt to establish the circuit switching type communication connection with said mobile communication terminal.

### BRIEF DESCRIPTION OF THE DRAWINGS

These and other objects, features, and advantages of the present invention will become more apparent upon reading the following detailed description with reference to the accompanying drawings, in which:
Fig.1 is a schematic block view showing a hardware structure of a wireless communication system according to one embodiment of the present invention;
Fig.2 is a schematic block view showing a hardware structure of an on-vehicle apparatus used in the wireless communication system according to one embodiment of the present invention; and
Fig.3 is a flow chart illustrating a flow of a line switching process in the wireless communication system according to one embodiment of the present invention.

### DETAILED DESCRIPTION OF THE PREFERRED EMBODIMENTS

A preferred embodiment of the present invention is now described with reference to the appended drawings. The basic concept, main hardware structure, principle of operation, and basic way to control a communication apparatus/system for realizing both circuit switching type wireless communication and packet switching type wireless communication as well as a voice communication on the packet switching type communication connection using, for example, VoIP are not described in detail in the following description because such matters are already known to persons skilled in the art.

In this embodiment, as an example, it is assumed that the wireless communication system of the present invention is applied to a wireless communication between a mobile station and a fixed station, and that the mobile station is an on-vehicle communication apparatus.

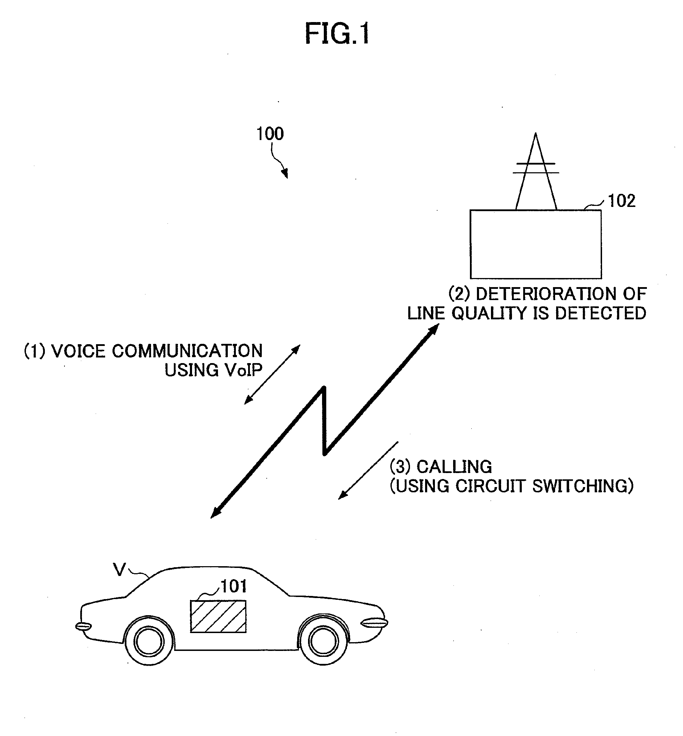

A wireless communication system of an embodiment of the present invention is now described with reference to Figs.1-3.

First, a schematic of the whole wireless communication system 100 according to this embodiment is now described with reference to Fig. 1.

The wireless communication system 100 of this embodiment includes an on-vehicle apparatus 101 installed in a service contract vehicle V, and a center 102, which is a communication station managed/administrated by an operational service entity such as an automaker, an automobile retailer, or a specialized company, and others.

The on-vehicle apparatus 101 and the center 102 are configured to communicate with each other using both a two-way wireless packet switching type communication connection and a two-way wireless circuit switching type communication connection.

In the context of Fig.1, it is illustrated as an example that the on-vehicle apparatus 101 and the center 102 directly communicate with each other. However, note that the communication connection between the on-vehicle apparatus 101 and the center 102 of this embodiment is not limited to such a direct connection and may be by indirect communication connection via inter-vehicle communication, road-vehicle communication, and/or satellite communication.

Since a variety of transmission methods and hardware structures are already proposed on a detailed specification of such a road-vehicle communication and are known to persons skilled in the art, those are not explained here in detail.

A user of the vehicle V realizes a voice communication with the center 102 by using the on-vehicle apparatus 101, so that the user can, for example, inform a staff member of the center 102 of an accident or an incident involving on the vehicle V, and receive various service announcements from an operator of the center 102.

In Fig.1, only a single contract vehicle V is illustrated for the sake of simplicity. However, it is understood by those skilled in the art that the center 102 can communicate with a plurality of the contract vehicles V in the wireless communication system of this embodiment.

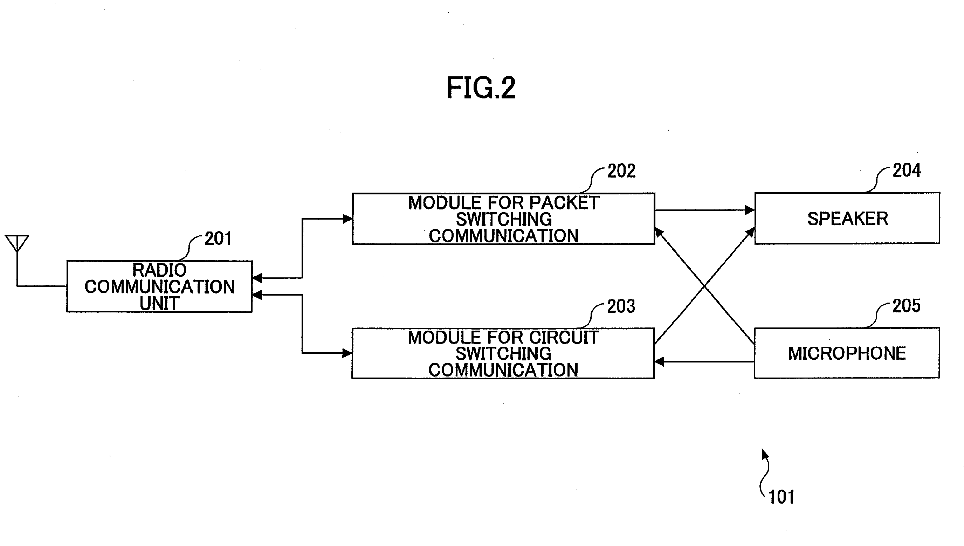

Fig.2 is a schematic block view showing a hardware structure of an on-vehicle apparatus 101, which is installed in the contract vehicle V and communicates with the center 102.

The on-vehicle apparatus 101 includes a radio communication unit 201 for transmitting and receiving information to and from the center 102 using a wireless communication. The performance and shape of an antenna installed in the radio communication unit 201 as well as the communication method and frequency band used are not limited to particular ones and any one may be applied. More specifically, the wireless communication method based on the communication standards for the existing cellular phone system and the wireless LAN may be applied.

The on-vehicle apparatus 101 also includes a module 202 for packet switching communication for establishing the packet switching type (connectionless type) communication connection and performing a two-way packet switching type communication with the center 102, via the radio communication unit 201. In this embodiment, the module for packet switching communication 202 is configured to perform a voice communication with the center 102 using VoIP.

The on-vehicle apparatus 101 also includes a module 203 for circuit switching communication for establishing the circuit switching type (connection type) communication connection and performing a two-way circuit switching type communication with the center 102, via the radio communication unit 201. In this embodiment, the module for circuit switching communication 203 is configured to be in a standby state when the module 202 for packet switching communication is on the voice communication line using VoIP so that it can receive a call on the circuit switching type communication line.

The on-vehicle apparatus 101 also includes a speaker 204 for outputting voices of an operator of the center 102 to passengers, which are received from the center 102. The speaker 204 may be any speaker provided any place in a vehicle cabin so that the output voice can be easily listened for the passengers, and may also act as a speaker of another on-vehicle system such as a navigation system or an audio visual system.

The on-vehicle apparatus 101 also includes a microphone 205 for inputting voices of the passengers, which are to be transmitted to the operator of the center 102. The microphone 205 may be any microphone provided any place in the cabin so that the voices of the passengers are easy to be input, and may also act as a microphone of another on-vehicle system such as a navigation system or an audio visual system.

In the wireless communication system 100 configured in this way, when the user of the vehicle V makes a voice communication with the operator of the center 102, the voice communication via the packet switching type communication connection using VoIP is given priority. This is because the voice communication on the packet switching type communication connection enables a metered accounting based on the communicated amount of data, which is difficult to be realized in the circuit switching type communication connection, and makes effective use of network resources.

However, on the other hand, on the packet switching type communication connection, the quality of voice communication/circuit connection may be degraded by external factors such as the convergence of communication traffic and the entrance of the mobile station into a weak electric field region.

Consequently, in this embodiment, while the voice communication is performed on the packet switching type communication connection using VoIP ((1) of Fig.1), the center 102 monitors the line quality of that connection. When the deterioration of line quality is detected ((2) of Fig.1), the center 102 makes a call using the circuit switching type communication to the on-vehicle apparatus 101 ((3) of Fig.1) to establish the circuit switching type communication connection and switch the voice communication from the packet switching type communication to the circuit switching type communication.

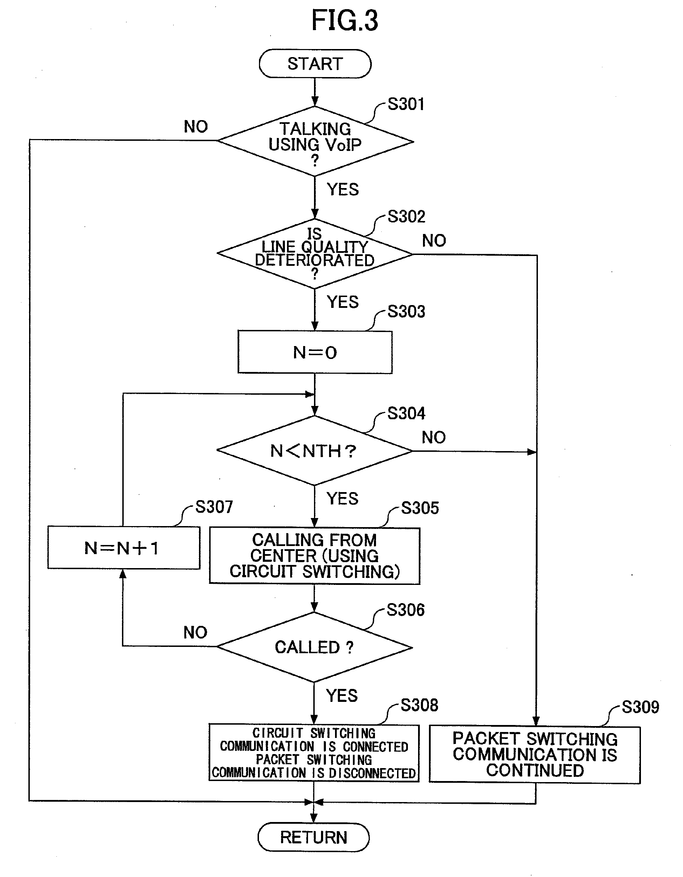

The above-mentioned line switching process in the wireless communication system 100 of this embodiment is now described in detail with reference to a flowchart of Fig.3.

As described above, while the user of the vehicle V is talking with the center 102 on the packet switching type communication connection using VoIP ("YES" in S301), the center 102 monitors the line quality of that packet switching type communication connection and determines whether line quality deteriorates to a level equal to a predetermined level or less (S302).

If the line quality on the packet switching type communication connection is relatively fine ("NO" in S302), the voice communication on the packet switching type communication connection using VoIP is continued (S309).

If the line quality on the packet switching type communication connection used for the VoIP voice communication deteriorates to a level equal to the predetermined level or less ("YES" in S302), the center 102 initializes a counter N so that N=0 is realized (S303) and then determines whether the counter N is below a predetermined value N_{TH} (S304).

If the counter N is below the predetermined value N_{TH} ("YES" in S304), the center 102 makes a call on the circuit switching type communication connection to the on-vehicle apparatus 101 (S305).

The module 203 for circuit switching communication is ready to receive a call via the circuit switching type communication connection, while the module 202 for packet switching communication is on the VoIP voice communication (S306). When the module 203 for circuit switching communication receives a call from the center 102 ("YES" in S306), it considers that the center 102 requests the circuit switching type communication connection and the line quality of the circuit switching type communication connection is fine enough to establish such the connection since the call from the center 102 has reached to the on-vehicle apparatus 101. Accordingly, the module 203 for circuit switching communication responds to that call and establishes the circuit switching type communication connection with the center 102 (S308). Then, the on-vehicle apparatus 101 seamlessly switches the voice communication from VoIP on the packet switching type communication connection to the established circuit switching type communication connection and after this switching, disconnects the packet switching type communication connection (S308).

On the other hand, since there may be some regions where the packet switching type communication connection can be established but the circuit switching type communication connection cannot be established, it may happen that the call on the circuit switching type communication connection from the center 102 cannot reach the on-vehicle apparatus 101. Consequently, if the call on the circuit switching type communication connection from the center 102 is not received at the on-vehicle apparatus 101 ("NO" in S306), the counter N is incremented (S307) and the flow goes back to S304.

In other words, the calling on the circuit switching type communication connection from the center 102 to the on-vehicle apparatus 101 is attempted a predetermined (N_{TH}) times. At this time, the packet switching type communication line still remains connected with the deteriorated line quality.

If the calling on the circuit switching type communication connection from the center 102 is not yet received at the on-vehicle apparatus 101 after the calling on the circuit switching type communication connection from the center 102 to the on-vehicle apparatus 101 repeats the predetermined (N_{TH}) times ("NO" in S304), the center 102 first gives up switching the voice communication from the packet switching type communication connection to the circuit switching type communication connection and then continues the voice communication on the packet switching type communication connection (S309).

Thus, according to this embodiment, the packet switching type communication connection is not disconnected at the timing when the deterioration of line quality of the packet switching type communication connection is detected or when the center 102 makes a call on the circuit switching type communication connection. Instead, the packet switching type communication connection is disconnected after the circuit switching type communication connection is established and the voice communication is transferred to the established circuit switching type communication connection. Accordingly, even if the circuit switching type communication connection cannot be established because of the line/radio wave condition, the packet switching type communication connection is maintained so that the line connection between the on-vehicle apparatus 101, which is a mobile station, and the center 102, which is a fixed station, is not cut off and it is not necessary to reconnect the packet switching type communication connection. Hence, the line connection can be maintained without depending on the position of the mobile station.

Also, according to this embodiment, when the deterioration of line quality of the packet switching type communication connection is detected during the VoIP voice communication, it is attempted a plurality of times to establish the circuit switching type communication connection. Consequently, this embodiment increases the likelihood to establish the circuit switching type communication connection, rather than a case where only a single call is made for establishing the circuit switching type communication connection.

In the meantime, it is considered that the above-mentioned feature where the voice communication between the on-vehicle apparatus 101 and the center 102 is not cut off and the line connection is maintained is particularly advantageous when an emergency call is made informing the operator of the center 102 of an accident or an incident involfing the vehicle V. Accordingly, in the above embodiment, it may be possible to implement the line connection switching process when only the VoIP voice communication is used for transmitting the emergency call.

Also, in the above embodiment, by way of example, an illustrative case is described where it is the center 102 that monitors the line quality of the packet switching type communication connection during the VoIP voice communication and determines whether it deteriorates to a level equal to the predetermined level or less. However, it can be understood by those skilled in the art that the present invention is not limited to such an embodiment. For example, another case where the on-vehicle apparatus 101 is configured to monitor the line quality and detect the deterioration of that line quality is also within the scope of the present invention. However, it is preferable as in the above embodiment that the center 102 performs this function in view of the allowable level of processing workload, in order to reduce the processing workload of the on-vehicle apparatus 101, which is considered to be less than that of the center 102.

Similarly, in the above embodiment, by way of example, an illustrative case is described the center 102 makes the call on the circuit switching type communication connection when the deterioration of line quality of the packet switching type communication connection is detected during the VoIP voice communication. However, it can be understood by those skilled in the art that the present invention is not limited to such an embodiment. For example, there is another case where the on-vehicle apparatus 101 is configured to make a call on the circuit switching type communication connection when the deterioration of line quality of the packet switching type communication connection is detected during the VoIP voice communication. However, it is also preferable as in the above embodiment that the center 102 performs this function in view of the allowable level of processing workload, in order to reduce the processing workload of the on-vehicle apparatus 101, which is considered to be less than that of the center 102.

The present invention is applicable to any wireless communication system including communication stations for communicating with each other using both the packet switching type communication connection and the circuit switching type communication connection. In a case where the mobile station is an on-vehicle communication apparatus as in the above embodiment, the present invention does not depend on the kind of power source, kind of fuel, visual design, weight, size, or performance of the vehicle on which the on-vehicle communication apparatus is installed.

The contents of Japanese Patent Application No. JP2006-180177 filed on June 29, 2006 including the specification, drawings, and abstract are incorporated herein by reference in its entirety.

## Claims

1. A wireless communication system for realizing a packet switching type communication connection and a circuit switching type communication connection between a mobile communication terminal and a fixed station,
wherein said fixed station is configured to, when the packet switching type communication connection is established between said mobile communication terminal and said fixed station and the line quality of that packet switching type communication connection deteriorates to a level equal to a predetermined level or less, attempt to establish the circuit switching type communication connection with said mobile communication terminal; and
said mobile communication terminal is configured to, when the packet switching type communication connection is established between said mobile communication terminal and said fixed station and said mobile communication terminal receives a call from the fixed station on the circuit switching type communication connection, establish the circuit switching type communication connection with the fixed station by responding to that call and then disconnect the packet switching type communication connection with the fixed station.

2. The wireless communication system as claimed in claim 1, wherein:
said fixed station is configured to, when the packet switching type communication connection is established between said mobile communication terminal and said fixed station and the line quality of that packet switching type communication connection deteriorates to a level equal to a predetermined level or less, attempt a plurality of times to establish the circuit switching type communication connection with said mobile communication terminal.

3. The wireless communication system as claimed in claim 1, wherein:
said fixed station is configured to, when the packet switching type communication connection is established between said mobile communication terminal and said fixed station to communicate a predetermined content and the line quality of that packet switching type communication connection deteriorates to a level equal to a predetermined level or less, attempt to establish the circuit switching type communication connection with said mobile communication terminal.

4. The wireless communication system as claimed in claim 1, wherein:
said fixed station is configured to, when the packet switching type communication connection is established between said mobile communication terminal and said fixed station, monitor whether or not the line quality of that packet switching type communication connection deteriorates to a level equal to a predetermined level or less.

5. The wireless communication system as claimed in claim 1, wherein:
said mobile communication terminal is an on-vehicle apparatus.
